**Europäisches Patentamt**

**European Patent Office**

**Office européen des brevets**

(19)

(11) Veröffentlichungsnummer : **0 067 787**
**B1**

(12) **EUROPÄISCHE PATENTSCHRIFT**

(45) Veröffentlichungstag der Patentschrift :
01.10.86

(51) Int. Cl.⁴ : **H 04 Q   7/04**

(21) Anmeldenummer : 82730075.7

(22) Anmeldetag : 03.06.82

(54) Funkrufsystem.

(30) Priorität : 13.06.81 DE 3123617

(43) Veröffentlichungstag der Anmeldung :
22.12.82 Patentblatt 82/51

(45) Bekanntmachung des Hinweises auf die Patenterteilung : 01.10.86 Patentblatt 86/40

(84) Benannte Vertragsstaaten :
GB IT NL SE

(56) Entgegenhaltungen :
EP-A- 0 040 954
US-A- 4 178 475
US-A- 4 178 476
POST OFFICE ELECTRICAL ENGINEERS JOURNAL;
Band 71, Januar 1979, Seiten 247-251, London, G.B.,
N.W. BROWN et al.: "Extension of the British Office
radiopaging service"
NACHRICHTENTECHNISCHE ZEITSCHRIFT, Band 29,
Nr. 8, August 1976, Seiten 576-578, Berlin, DE., M.
KANGASLUOMA: "Das geplante finnische Funkrufsystem"
TN-NACHRICHTEN; Nr. 84, 1982, Seiten 57-65,
Dreieich, DE., M. HEINZ et al.: "Personenruf-Funkanlage für landesweite Rufnetze"

(73) Patentinhaber : ANT Nachrichtentechnik GmbH
Gerberstrasse 33
D-7150 Backnang (DE)

Telefonbau und Normalzeit GmbH
Mainzer Landstrasse 128-146 Postfach 4432
D-6000 Frankfurt (Main) (DE)

(72) Erfinder : Koch, Harry, Ing. grad.
Burgstrasse 263
D-3006 Burgwedel 3 (DE)
Erfinder : Ludwig, Werner, Ing. grad.
Platanenstrasse 30
D-3340 Wolfenbüttel (DE)
Erfinder : Schendel, Heinz-Dietmar, Ing. grad.
Kiebitzmoor 53
D-3150 Peine (DE)
Erfinder : Faust, Günther, Ing. Dr.
Goerdeler Strasse 14
D-6074 Rödermark (DE)
Erfinder : Zier, Hartmut, Ing. grad.
Talstrasse 50
D-6238 Hofheim 7 (DE)

(74) Vertreter : Schickle, Gerhard, Dipl.-Ing.
ANT Nachrichtentechnik GmbH Patent- und Lizenzabteilung Gerberstrasse 33
D-7150 Backnang (DE)

**Beschreibung**

Die Erfindung betrifft ein Verfahren und eine Schaltungsanordnung zum Betreiben eines Funkrufsystems, bei welchem über das Fernsprechnetz mit Fernwahleinrichtungen von einer Fernsprechteilnehmerstation durch Wahl einer besonderen Kennzahl eine Funkrufzentrale erreichbar ist, welche aufgrund der anschließend vom Fernsprechteilnehmer gewählten Rufnummer des gerufenen Funkrufteilnehmers ein Rufsignal an den betreffenden Funkrufempfänger aussendet, wobei das Rufsignal auch eine vom rufenden Teilnehmer eingegebene Nachricht (beispielsweise eine Rufnummer) enthält, die auf einer Anzeigeeinrichtung des Funkrufempfängers optisch angezeigt wird.

Bei einem derartigen Funkrufsystem erfolgt der Zugriff zu den Funkrufzentralen über das Fernsprechnetz. Handelt es sich bei diesem Fernsprechnetz um das öffentliche Fernsprechnetz, so ist ein Funkruf landesweit möglich. Der Funkrufempfänger, welcher sehr klein gehalten ist, wird von der zu rufenden Person dauernd getragen. Ein von dem Funkempfänger aufgenommener Funkruf wird akustisch gemeldet, und optisch wird eine Nachricht angezeigt, beispielsweise die Rufnummer des rufenden Teilnehmers. So ist es beispielsweise möglich, daß der Gerufene mit Hilfe der angezeigten Rufnummer des rufenden Teilnehmers über das öffentliche Fernsprechnetz durch Aufbau einer Fernsprechverbindung mit dem rufenden Teilnehmer in Verbindung treten kann. Ein derartiges Funkrufsystem ist in der Zeitschrift « Technische Mitteilungen AEG-Telefunken », Jahrgang 68 (1978), Heft 6/7 auf den Seiten 287 bis 290 beschrieben. Dieses Funkrufsystem ist in erster Linie für den Einsatz in Ballungsgebieten gedacht.

Zur Gebührenerfassung bei einem landesweiten Funkrufsystem ist in der US-PS 4 17 84 76 in Funkrufzentralen jeweils ein Gebührenspeicher vorgesehen, dessen Speicherinhalt von Zeit zu Zeit zu einer zentralen Gebührenerfassungseinrichtung übertragen wird.

Es ist Aufgabe der Erfindung, bei einem Funkrufsystem zum Einsatz auf Landesebene geeignete andere Maßnahmen zur sinnvollen Gebührenerfassung zu treffen. Diese Aufgabe wird gelöst durch das Verfahren nach Patentanspruch 1, zu welchem vorteilhafte Weiterbildungen in den Unteransprüchen angegeben sind.

Eine Weiterbildung der Erfindung besteht darin, daß der rufende Teilnehmer nach Eingabe aller Ziffern eine Mitteilung (beispielsweise eine Ansage mit der Aufforderung, einzuhängen, sobald ein Hörton ertönt) erhält, nach deren Beginn die Übermittlung der Gebührenimpulse erfolgt, und daß der Funkruf nach Beendigung der Übermittlung der Gebührenimpulse abgesetzt wird, wenn die Verbindung zum rufenden Teilnehmer zu diesem Zeitpunkt noch bestanden hat, und anschließend der rufende Teilnehmer durch den Hörton zum Einhängen veranlaßt wird. Mit dieser Maßnahme werden Manipulationen des rufenden Teilnehmers unterbunden, die darin bestehen könnten, durch vorzeitiges Einhängen eine Übermittlung des Gebührenimpulse zu verhindern.

Eine andere Weiterbildung der Erfindung besteht darin, daß durch die Code-Ziffer unterschiedliche Suchbereiche einstellbar sind. Es ist damit möglich, entweder nur regional oder auch landesweit oder auch in mehreren Regionen den Funkruf auszustrahlen.

Eine vorteilhafte Weiterbildung der Erfindung besteht auch darin, daß durch die Code-Ziffer unterschiedliche Rufklassen markierbar sind. Hierunter ist beispielsweise ein Einzelruf, ein Gruppenruf, Rufe mit besonderer Dringlichkeit usw. zu verstehen.

Ferner kann durch Wahl einer bestimmten Code-Ziffer der rufende Teilnehmer eine Ansage erhalten, welche mitteilt, daß im Anschluß an die Ansage eine Sprechverbindung zum gerufenen Funkrufempfänger bereitgestellt wird für die Übermittlung von Sprachinformationen zum Funkrufempfänger. Durch Wahl einer bestimmten Code-Ziffer kann der rufende Teilnehmer auch den Wunsch nach einer Sprechverbindung ankündigen, wobei diese Sprechverbindung allerdings nur in einer Richtung, d. h. vom rufenden Teilnehmer zum Funkrufempfänger möglich ist.

Weiterhin kann der rufende Teilnehmer jeweils mit derjenigen Funkrufzentrale verbunden werden, welche zum Zentralamtsbereich des Teilnehmeranschlusses gehört, wobei die Informationen für Funkrufe in andere Zentralamtsbereiche von der Funkrufzentrale des rufenden Teilnehmers in den bzw. die gewünschten Zentralamtsbereiche über das Fernsprechnetz zu der bzw. den betreffenden Funkrufzentralen FZ übermittelt werden. Auf diese Wiese kann das Funkrufsystem mit einer einheitlichen Rufnummer erreicht werden.

Eine andere Möglichkeit besteht darin, daß der rufende Teilnehmer zwar wiederum jeweils mit derjenigen Funkrufzentrale verbunden wird, welche zum Zentralamtsbereich des rufenden Teilnehmeranschlusses gehört, daß aber die Informationen für Funkrufe in andere Zentralamtsbereiche über Datenleitungen zu der bzw. den betreffenden Funkrufzentralen übermittelt werden. Durch die Verwendung von Datenleitungen wird das Fernsprechnetz für derartige Funkrufe entlastet.

Eine Weiterbildung der Erfindung besteht auch in einer Schaltungsanordnung zur Durchführung des Verfahrens dadurch, daß verbindungsindividuell je eine die Schnittstelle zwischen dem Fernsprechsystem und der Funkrufzentrale bildende Anpassungsübertragung vorgesehen ist und jeweils eine Vielzahl von Anpassungsübertragungen mit einer Konzentratoreinrichtung verbunden ist, welche den Datenaustausch zwischen den Anpassungsübertragungen und der Funkrufzentrale steuert. Die Anpassungsübertragung dient dabei zur Einspeisung der Gebührenimpulse, Ansagen und Hörtöne.

Zusätzliche Weiterbildungen ergeben sich aus den Unteransprüchen. In Anpassung an die von Land zu Land verschiedenen Vorschriften der Postbehörden kann es sinnvoll sein, die in den Patentansprüchen aufgeführten Merkmale zu anderen Kombinationen zusammenzufassen.

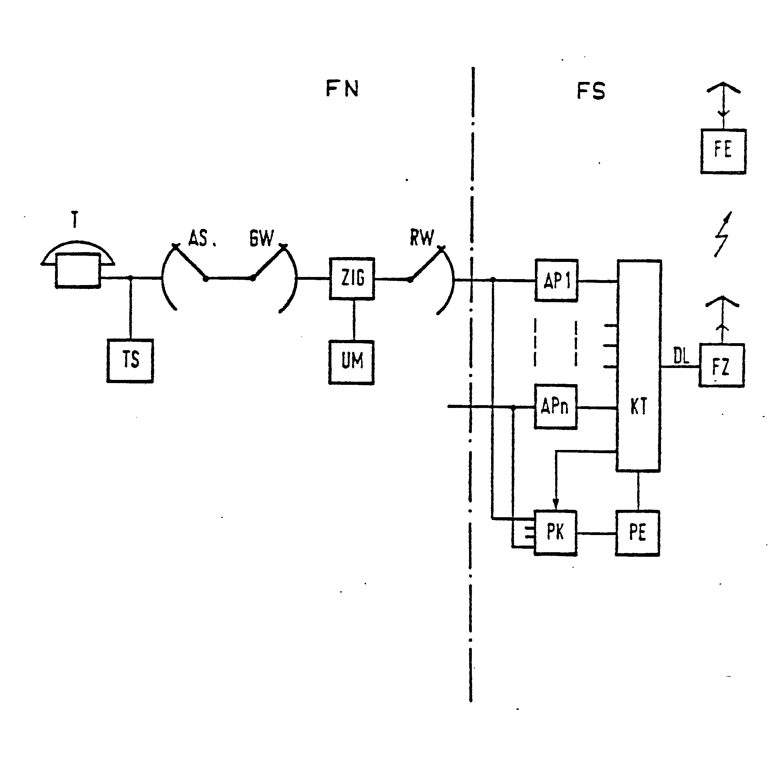

Die Erfindung wird anhand eines Ausführungsbeispiels näher erläutert, welches in der Zeichnung dargestellt ist. Die Anpassungsübertragungen AP1 bis APn bilden die Schnittstelle zwischen einem öffentlichen Fernsprechnetz FN und einem Funkrufsystem FS. Die Anpassungsübertragungen AP weisen jeweils einen Wahlempfänger zur Aufnahme der Wahlkennzeichen auf, welche anschließend in Form von Datenworten weitergegeben werden. Weiterhin sind Einrichtungen zum Einspeisen von Gebührenimpulsen in das Fernsprechnetz FN vorgesehen. Eine nicht gezeigte Ansageeinrichtung und ein Hörtongenerator ist bedarfsweise mit den Anpassungsschaltungen AP1 ... APn (zukünftig kurz als APn bezeichnet) verbindbar, wobei die Ansagetexte bzw. Hörtöne in die Sprechadern zur Übermittlung in das Fernsprechnetz FN einspeisbar sind. Die Schnittstelle zwischen den Anpassungsübertragungen AP und einer Funkrufzentrale FZ bildet eine Konzentratoreinrichtung KT. Sie ist mit der Funkrufzentrale FZ über eine Datenleitung DL verbunden. Die Hauptaufgabe der Konzentratoreinrichtung KT besteht in der Steuerung des Datenaustauschs zwischen der Funkrufzentrale FZ und den Anpassungsschaltungen AP. Aus technischen Gründen ist es nicht möglich, mehr als eine bestimmte Anzahl von Anpassungsschaltübertragungen AP mit einer Konzentratoreinrichtung KT zu betreiben. Zum Anschluß weiterer Anpassungsübertragungen AP an die Funkrufzentrale FZ sind demgemäß weitere Konzentratoreinrichtungen KT notwendig.

Das Funkrufsystem FS kann beispielsweise derart betrieben werden, daß jeweils eine Funkrufzentrale FZ einem Zentralamtsbereich des Fernsprechnetzes FN zugeordnet ist, wobei alle Funkrufzentralen mit der gleichen Kennzahl angewählt werden. Es ist jedoch auch denkbar, neben dieser Kennzahl eine weitere Kennzahl zum gezielten Anwählen einer bestimmten Funkrufzentrale FZ vorzusehen Zum Aufbau des Fernsprechnetzes, insbesondere der Fernwahleinrichtungen wird auf das Buch von Führer, Landesfernwahl, Band 1, Verlag Oldenbourg, München-Wien 1966 verwiesen, so daß im Rahmen dieser Beschreibung nicht weiter darauf eingegangen wird.

Zum Auslösen eines Funkrufes wählt der rufende Teilnehmer von der Teilnehmerstation T zunächst die Ziffer O, um die Fernebene des Fernsprechnetzes FN zu erreichen. Ein belegter Wähler der Wahlstufe GW wird auf eine freie Fernwahleinrichtung, den Zählimpulsgeber ZIG eingestellt, welcher die anschließend gewählte Kennzahl der Funkrufzentrale FZ aufnimmt und an die Umwerteeinrichtung UM weitergibt. Nach der Auswertung der Kennzahl erhält der Zählimpulsgeber ZIG die Information, daß es sich bei der betreffenden Verbindung um eine gebührenfreie Verbindung handelt, d. h. daß von diesem keine Zählimpulse einzuspeisen sind. Außerdem wird durch die Umwerteeinrichtung UM die Einstellung eines Wählers der Richtungswahlstufe RW auf eine freie Anpassungsübertragung AP veranlaßt.

Die Belegung der Anpassungsübertragung AP1 wird über die Konzentratoreinrichtung KT und die Datenleitung DL an die Funkrufzentrale FZ gemeldet, worauf in derselben in einem der Anpassungsübertragung AP1 fest zugeordneten Speicherplatz dieselbe als belegt gekennzeichnet wird. Die anschließend von der Teilnehmerstation T oder eventuell von einem Zwischenspeicher in der Fernwahleinrichtung eintreffende Code-Ziffer wird von der Anpassungsübertragung AP/aufgenommen und in Form von Datenworten der Funkrufzentrale FZ übermittelt. Die Code-Ziffer kann aus mehreren Stellen, beispielsweise zwei Stellen bestehen, wobei die erste Stelle der Code-Ziffer die Art des Rufes, beispielsweise regional, landesweit usw. kennzeichnet, während die zweite Stelle der Code-Ziffer zur Kennzeichnung von normalen Rufen, dringenden normalen Rufen, Gruppenrufen usw. dient. Weiterhin kann der rufende Teilnehmer durch Wahl einer bestimmten Code-Ziffer angeben, daß er eine Sprachverbindung zum gerufenen Funkrufteilnehmer wünscht. Die nach der Code-Ziffer vom rufenden Teilnehmer gewählte Rufnummer des gewünschten Funkrufteilnehmers gelangt in der bereits beschriebenen Weise in die Funkrufzentrale FZ. Anhand dieser Rufnummer wird nun festgestellt, ob im Falle eines Regionalrufs die betreffende Funkrufzentrale FZ für die Aussendung des Funkrufs in Frage kommt. Es werden zunächst davon ausgegangen, daß dies der Fall sei.

Der rufende Teilnehmer kann nun im Rahmen des Funkrufs an den Funkrufempfänger des gerufenen Funkrufteilnehmers eine Information übermitteln lassen, beispielsweise seine eigene Rufnummer einschließlich Ortskennzahl. Diese Information wird ebenfalls von der Teilnehmerstation T eingegeben und auf dem bereits beschriebenen Weg der Funkrufzentrale FZ übermittelt, wo sie ebenfalls eingespeichert wird. Die Übermittlung dieser Information erfolgt im Rahmen des Funkrufsignals an den Funkrufempfänger FE, wo die übermittelte Information empfangen, eingespeichert und mit einer Anzeigeeinrichtung optisch angezeigt wird. Die Möglichkeit der Eingabe dieser Information ist zeitlich begrenzt, d. h. sie muß innerhalb einer bestimmten Zeit eingegeben worden sein. Ist dies nicht innerhalb der vorgegebenen Zeit geschehen, so kann entweder der Teilnehmer durch eine entsprechende Ansage hierzu aufgefordert oder der Funkruf ohne diese Information abgesetzt werden.

Zur Erleichterung der Vorgänge zur Abwicklung eines Funkrufs sind die Anpassungsübertragungen AP mit einer nichtgezeigten Ansageeinrichtung verbunden, welche den rufenden Teilnehmer entsprechend informieren. So kann beispielsweise einem rufenden Teilnehmer nach Verbindung mit einer Anpassungsübertragung AP1 mitgeteilt werden, daß· er mit dem Funkrufsystem FS verbunden ist und die Code-Ziffer und die Rufnummer des zu rufenden Funkrufteilnehmers eingeben möge. Ebenso kann im Anschluß daran durch eine weitere Ansage die Eingabe der an den Funkrufteilnehmer zu übermittelnden Information aufgefordert werden. Auf jeden Fall erhält jedoch der rufende Teilnehmer eine Ansage, welche mitteilt, daß bei Erscheinen eines Hörtones die Verbindung auszulösen ist. Die Zeit zur Übermittlung der Ansage wird dazu verwendet, die Gebührenimpulse von der Anpassungsübertragung AP1 an den Teilnehmeranschluß des rufenden Teilnehmers zu übermitteln, wo diese in bekannter Weise von einem anschlußindividuellen Gebührenzähler erfaßt werden. Hat die Verbindung bis zum Ende der Ansage bestanden, d. h. wurde sie nicht vorzeitig vom rufenden Teilnehmer ausgelöst, so erfolgt zu diesem Zeitpunkt erst die Aussendung des Funkrufs an den Funkrufempfänger FE durch die Funkrufzentrale FZ. Als Quittung für den abgesetzten Funkruf erhält der rufende Teilnehmer anschließend den besagten Hörton, welcher ihn zum Auslösen der Verbindung auffordert.

Die Anzahl der zu übermittelnden Gebührenimpulse wird in der Funkrufzentrale FZ festgelegt und zwar auf der Grundlage der Code-Ziffer und eventuell auch der vom rufenden Teilnehmer· eingegebenen Rufnummer, in diesem Fall der darin enthaltenen Ortskennzahl. Die Anzahl der Gebührenimpulse richtet sich einmal nach dem Ursprung des rufenden Teilnehmers, nach dem Bereich des Funkrufs (regional oder landesweit), nach der Rufart (normaler Ruf, dringender normaler Ruf, Gruppenruf) und danach, ob eine Sprechverbindung gewünscht wird oder nicht. Bei einer Sprechverbindung ist es darüberhinaus noch möglich, auch eine zeitabhängige Zählung durchzuführen.

Sind die Funkrufzentralen FZ durch individuelle Kennzahlen erreichbar, so kann der rufende Teilnehmer die gewünschte Funkrufzentrale über das Fernsprechnetz FN direkt anwählen, andernfalls ist die gewünschte Funkrufzentrale FZ durch Wahl einer bestimmten Code-Ziffer zu markieren. Stellt die Funkrufzentrale FZ fest, daß sie nicht für das Absetzen des Funkrufs zuständig ist, so übermittelt sie die hierzu notwendigen Informationen an die betreffende Funkrufzentrale FZ entweder über das Fernsprechnetz oder über eine nicht gezeigte Datenleitung. Es ist denkbar, einer Funkrufzentrale FZ mehrere Sendeeinrichtungen zuzuordnen, durch welche der Bereich der Funkrufzentrale FZ in mehrere Unterbereiche unterteilt wird. Auf diese Weise kann der Funkruf innerhalb des Bereichs auf kleinere Unterbereiche beschränkt werden. Die Auswahl dieser Unterbereiche kann wiederum über die Code-Ziffer erfolgen.

Im Falle eines Gruppenrufs wird der Funkruf auf mehrere Bereiche/Unterbereiche ausgedehnt, wobei die betreffenden Funkrufzentralen FZ von der angewählten Funkrufzentrale die entsprechenden Informationen erhalten. Durch die Wahl unterschiedlicher Code-Ziffern läßt sich auch noch zwischen einem Normalruf und einem dringenden Normalruf unterscheiden, wobei letzterer ein unterschiedliches akustisches Signal am Funkrufempfänger FE zur Folge hat.

Durch Wahl ·einer unterschiedlichen Code-Ziffer kann der rufende Teilnehmer, wie bereits beschrieben, den Wunsch nach einer Sprechverbindung mit dem Funkrufempfänger FE zum Ausdruck bringen. Diese Sprechverbindung ist jedoch nur einseitig und dient nur zur Übermittlung von Informationen vom rufenden Teilnehmer zum gesuchten Funkrufteilnehmer.

Zur Prüfung der Anpassungsübertragungen AP auf einwandfreies Arbeiten sind die Eingänge derselben mit den Ausgängen einer besonderen Koppeleinrichtung PK verbunden, welche mit einer Prüfeinrichtung PE verbunden ist. Die Prüfeinrichtung PE bildet die Kriterien nach, die auf den vom Fernsprechnetz FN ankommenden Leitungen auftreten und welche von den Anpassungsübertragungen AP aufgenommen und über die Konzentratoreinrichtung KT und die Datenleitung DL an die Funkrufzentrale FZ weitergegeben werden. Diese Prüfung der Anpassungsübertragungen AP erfolgt auf Veranlassung der Funkrufzentrale FZ. Die Informationen für die Durchführung der Prüfung können nun entweder über die Datenleitung DL und die Konzentratoreinrichtung KT der Prüfeinrichtung PE übermittelt werden oder auch über eine besondere nicht gezeigte Datenleitung von der Funkrufzentrale FZ direkt an die Prüfeinrichtung PE gegeben werden. Mit Hilfe der Koppeleinrichtung PK wird die Prüfeinrichtung PE jeweils mit einer Anpassungsübertragung AP verbunden, die ankommend für die Dauer der Prüfung besetzt gekennzeichnet wird und somit für die Auslösung eines Funkrufs nicht belegbar ist. Das Ergebnis der Prüfung wird von der Funkrufzentrale FZ ausgewertet.

Eine weitere Möglichkeit der Prüfung der Anpassungsübertragungen AP, der Konzentratoreinrichtung KT und der Datenleitung DL besteht in der Nachbildung von Anrufen aus dem Fernsprechnetz FN zu der betreffenden Funkrufzentrale FZ. Zu diesem Zweck wird diese mit einem besonderen Teilnehmeranschluß des Fernsprechnetzes FN verbunden, wobei durch die Funkrufzentrale FZ der Aufbau von Fernsprechverbindungen veranlaßt wird.

## Patentansprüche

1. Verfahren zum Betreiben eines Funkrufsystems, bei welchem über ein Fernsprechnetz (FN) mit Fernwahleinrichtungen (ZIG) von einer Fernsprechteilnehmerstation durch Wahl einer besonderen Kennzahl eine Funkrufzentrale (FZ) erreichbar ist, welche aufgrund der anschließend vom Fernsprechteilnehmer gewählten Rufnummer des gerufenen Funkrufteilnehmers ein Rufsignal an den betreffenden Funkrufempfänger (FE) aussendet, wobei das Rufsignal auch eine vom rufenden Teilnehmer eingegebene Nachricht (beispielsweise eine Rufnummer) enthält, die auf einer Anzeigeeinrichtung des Funkrufempfängers (FE) optisch angezeigt wird, dadurch gekennzeichnet, daß aufgrund der Wahl der Kennzahl der Funkrufzentrale in der belegten Fernwahleinrichtung (ZIG) die betreffende Verbindung als gebührenfrei gekennzeichnet wird, daß eine anschließend vom rufenden Teilnehmer gewählte Code-Ziffer, welche die Art des Funkrufs angibt, und die im Anschluß daran gewählte Rufnummer des gerufenen Funkrufteilnehmers von der Funkzentrale (FZ) ausgewertet wird und in Abhängigkeit von diesen Informationen durch die Funkrufzentrale (FZ) eine zonen- bzw. zonen- und zeitabhängige Aussendung von Gebührenimpulsen an den Anschluß des rufenden Teilnehmers veranlaßt wird.

2. Verfahren nach Anspruch 1, dadurch gekennzeichnet, daß der rufende Teilnehmer nach Eingabe aller Ziffern eine Mitteilung (beispielsweise eine Ansage) erhält, nach deren Beginn die Übermittlung der Gebührenimpulse erfolgt und der Funkruf nach Beendigung der Übermittlung der Gebührenimpulse abgesetzt wird, wenn die Verbindung zum rufenden Teilnehmer zu diesem Zeitpunkt noch bestanden hat, und anschließend der rufende Teilnehmer durch einen Hörton zum Einhängen veranlaßt wird.

3. Verfahren nach Anspruch 1 oder 2, dadurch gekennzeichnet, daß durch eine Code-Ziffer unterschiedliche Suchbereiche einstellbar sind.

4. Verfahren nach Anspruch 1, 2 oder 3, dadurch gekennzeichnet, daß durch die Code-Ziffer unterschiedliche Rufklassen markierbar sind, wie Einzelruf, Gruppenruf, dringlicher Ruf usw.

5. Verfahren nach einem der vorangehenden Ansprüche, dadurch gekennzeichnet, daß durch Wahl der bestimmten Code-Ziffer für einen Funkruf mit Sprachübermittlung der rufende Teilnehmer eine Ansage erhält, welche mitteilt, daß im Anschluß an die Ansage eine Sprechverbindung zum gerufenen Funkrufempfänger (FE) bereitgestellt wird, während der eine Übermittlung von Sprachinformationen zum Funkrufempfänger (FE) möglich ist.

6. Verfahren nach einem der vorangehenden Ansprüche, dadurch gekennzeichnet, daß der rufende Teilnehmer jeweils mit derjenigen Funkrufzentrale (FZ) verbunden wird, welche zum Zentralamtsbereich des Teilnehmeranschlusses gehört, und daß die Information für Funkrufe in andere Zentralamtsbereiche von der Funkrufzentrale (FZ) des rufenden Teilnehmers in den bzw. die gewünschten Zentralamtsbereiche über das Fernsprechnetz zu der bzw. den betreffenden Funkrufzentralen (FZ) übermittelt wird.

7. Verfahren nach einem der vorangehenden Ansprüche, dadurch gekennzeichnet, daß der rufende Teilnehmer jeweils mit derjenigen Funkrufzentrale (FZ) verbunden wird, welche zum Zentralamtsbereich des rufenden Teilnehmeranschlusses gehört, und daß die Informationen für Funkrufe in andere Zentralamtsbereiche über Datenleitungen zu der bzw. den betreffenden Funkrufzentralen (FZ) übermittelt werden.

8. Schaltungsanordnung zur Durchführung des Verfahrens nach einem der Ansprüche 1 bis 7, dadurch gekennzeichnet, daß verbindungsindividuell jeweils eine die Schnittstelle zwischen dem Fernsprechnetz (FN) und der Funkrufzentrale (FZ) bildende Anpassungsübertragung (AP) vorgesehen ist und jeweils eine Vielzahl von Anpassungsübertragungen (AP) mit einer Konzentratoreinrichtung (KT) verbunden ist, welche den Datenaustausch zwischen den Anpassungsübertragungen (AP) und der Funkrufzentrale (FZ) steuert.

9. Schaltungsanordnung nach Anspruch 8, dadurch gekennzeichnet, daß jeweils eine Konzentratoreinrichtung (KT) über eine Datenleitung (DL) zum Beispiel über Modems mit der Funkrufzentrale (FZ) verbunden ist.

10. Schaltungsanordnung nach Anspruch 8 oder 9, dadurch gekennzeichnet, daß die Einspeisung der Gebührenimpulse in das Fernsprechnetz in der Anpassungsübertragung (AP) erfolgt.

11. Schaltungsanordnung nach einem der Ansprüche 8 bis 10, dadurch gekennzeichnet, daß für die Vielzahl von Anpassungsübertragungen (AP) jeweils eine Ansageeinrichtung vorgesehen ist.

12. Schaltungsanordnung nach einem der Ansprüche 8 bis 11, dadurch gekennzeichnet, daß die Anpassungsübertragung (AP) eine Empfangseinrichtung für Wahlkennzeichen aufweist und die durch die Wahlkennzeichen übermittelte Information in Form von Datenworten an die Funkrufzentrale (FZ) übermittelt werden.

13. Schaltungsanordnung nach einem der Ansprüche 8 bis 12, dadurch gekennzeichnet, daß die Anpassungsübertragungen (AP) eingangsseitig über eine Koppeleinrichtung (PK) durch die Funkrufzentrale (FZ) erreichbar sind, wobei auf deren Veranlassung durch eine Prüfeinrichtung (PE) unter Steuerung der Koppeleinrichtung (PK) ankommende Anrufe nachbildet und auf diese Weise die Funktionsfähigkeit aller Einrichtungen (AP, KT, DL) überprüft wird.

14. Schaltungsanordnung nach einem der Ansprüche 8 bis 12, dadurch gekennzeichnet, daß die Funkrufzentrale (FZ) mit einem Teilnehmeranschluß des Fernsprechnetzes verbunden ist und zu Prüfzwecken auf Veranlassung der Funkrufzentrale Anrufe zu derselben durch eine Prüfeinrichtung (PE) nachgebildet werden.

**Claims**

1. Method for the operation of a radio paging system, in which a radio paging exchange (FZ) can be reached through selection of a particular identification number of a telephone subscriber station by way of a telephone network (FN) with long-distance selection equipments (ZIG) and emits a call signal to the concerned radio paging receiver (FE) by reason of the call number, subsequently selected by the telephone subscriber, of the called radio paging subscriber, wherein the call signal also contains a communication (for example a call number), which has been put in by the calling subscriber and is indicated optically on an indicating equipment of the radio paging receiver (FE), characterised thereby, that the concerned connection is characterised as free of fees in the engaged long-distance selection equipment (ZIG) by reason of the selection of the identification number of the radio paging exchange, that a code number which has been selected subsequently by the calling subscriber and states the kind of the radio call and the subsequently selected call number of the called radio paging subscriber are evaluated by the radio paging exchange (FZ) and, in dependence on these information data, an emission, which is dependent on zones or zones and time, of fee pulses to the connection of the calling subscriber is caused by the radio paging exchange (FZ).

2. Method according to claim 1, characterised thereby, that the calling subscriber after input of all numbers receives a message (for example an announcement), after the start of which the transmission of the fee pulses takes place and the radio call is discontinued after termination of the transmission of the fee pulses, when the connection is still in being at this point in time, and the calling subscriber is subsequently caused to hang up by an audible tone.

3. Method according to claim 1 or 2, characterised thereby, that different search regions are settable by a code number.

4. Method according to claim 1, 2 or 3, characterised thereby, that different call classes, such as individual call, group call, urgent call and so forth, are markable by the code number.

5. Method according to one of the preceding claims, characterised thereby, that the calling subscriber through selection of the certain code number for a radio call with speech transmission receives an announcement which informs that a speech connection to the called radio paging receiver (FE) will be made available following the announcement, for the duration of which connection a transmission of spoken information to the radio paging receiver (FE) is possible.

6. Method according to one of the preceding claims, characterised thereby, that the calling subscriber is each time connected with that radio paging exchange (FZ), which belongs to the exchange region of the subscriber connection and that the information for radio calls into other exchange regions is transmitted by the radio paging exchange (FZ) of the calling subscriber into the desired exchange region or regions to the concerned radio paging exchange or exchanges (FZ) by way of the telephone network.

7. Method according to one of the preceding claims, characterised thereby, that the calling subscriber is each time connected with that radio paging exchange (FZ), which belongs to the exchange region of the calling subscriber connection and that the information for radio calls into other exchange regions is transmitted by way of data lines to the concerned radio paging exchange or exchanges (FZ).

8. Circuit arrangement for the performance of the method according to one of the claims 1 to 7, characterised thereby, that a respective matching transmission device (AP) forming the interface between the telephone network (FN) and the radio paging exchange (FZ) is provided individually for each connection and a plurality of matching transmission devices (AP) is connected with a respective concentrator equipment (KT), which controls the data exchange between the matching transmission devices (AP) and the radio paging exchange (FZ).

9. Circuit arrangement according to claim 8, characterised thereby, that a respective concentrator equipment (KT) is connected by way of a data line (DL), for example by way of modems, with the radio paging exchange (FZ).

10. Circuit arrangement according to claim 8 or 9, characterised thereby, that the feeding of the fee pulses into the telephone network takes place in the matching transmission device (AP).

11. Circuit arrangement according to one of the claims 8 to 10, characterised thereby, that a respective announcing equipment is provided for the plurality of matching transmission devices (AP).

12. Circuit arrangement according to one of the claims 8 to 11, characterised thereby, that the matching transmission device (AP) displays a receiving equipment for selection identifications and the information transmitted by the selection identifications is transmitted in the form of data words to the radio paging exchange (FZ).

13. Circuit arrangement according to one of the claims 8 to 12, characterised thereby, that the matching transmission devices (AP) can be reached at the input side by way of a coupling equipment (PK) by the radio paging exchange (FZ), wherein on its initiation incoming calls are simulated under the control of the coupling equipment (PK) by a testing equipment (PE) and the functional capability of all equipments (AP, KT, DL) is tested in this manner.

14. Circuit arrangement according to one of the claims 8 to 12, characterised thereby, that the radio paging exchange (FZ) is connected with a subscriber connection of the telephone network and, for test purposes and on initiation of the radio paging exchange, calls to the same are simulated by a testing equipment (PE).

**Revendications**

1. Procédé d'exploitation d'un système d'appel radioélectrique, dans lequel, en composant un indicatif particulier sur un poste d'abonné d'un réseau téléphonique (FN) comportant des dispositifs sélecteurs (ZIG), on peut joindre un central d'appel radio (FZ) qui, d'après le numéro d'appel d'un abonné au système d'appel radio, composé ensuite par l'abonné au téléphone, émet un signal d'appel au récepteur d'appel radio (FE) concerné, et dans lequel le signal d'appel contient également un message (par exemple un numéro d'appel) donné par l'abonné appelant et qui est indiqué optiquement sur un dispositif d'affichage du récepteur d'appel radio (FE), caractérisé en ce que, à la suite de la numérotation de l'indicatif du central d'appel radio, la liaison concernée est marquée « sans taxe » dans le dispositif sélecteur (ZIG) occupé, qu'un chiffre de code composé après par l'abonné appelant et qui indique la nature de l'appel radio, de même que le numéro d'appel de l'abonné appelé, composé ensuite, sont traités par le central d'appel radio (FZ) et que le central d'appel radio, d'après ces informations, déclenche l'envoi, au raccordement de l'abonné appelant, d'impulsions de taxation en fonction de la zone d'appel ou de recherche ou de la zone et du temps d'appel.

2. Procédé selon la revendication 1, caractérisé en ce que l'abonné appelant, après la numérotation de tous les chiffres, reçoit une information (par exemple une annonce), après le début de laquelle commence la transmission des impulsions de taxation, l'appel radio est arrêté après la fin de la transmission des impulsions de taxation, si la liaison avec l'abonné appelant existe encore à ce moment, et l'abonné appelant est invité ensuite par une tonalité à raccrocher.

3. Procédé selon la revendication 1 ou 2, caractérisé en ce qu'un chiffre de code permet de définir différentes zones de recherche.

4. Procédé selon la revendication 1, 2 ou 3, caractérisé en ce que le chiffre de code permet d'indiquer différentes classes d'appel, telles qu'appel individuel, appel de groupe, appel urgent, et ainsi de suite.

5. Procédé selon une des revendications précédentes, caractérisé en ce que, en composant un chiffre de code prévu pour un appel radio avec communication parlée, l'abonné appelant reçoit une annonce l'informant qu'à la suite de l'annonce, une communication vocale avec le récepteur d'appel radio (FE) appelé est mise à disposition, au cours de laquelle des informations parlées peuvent être transmises au récepteur d'appel radio (FE).

6. Procédé selon une des revendications précédentes, caractérisé en ce que l'abonné appelant est connecté chaque fois au central d'appel radio (FZ) qui appartient à la zone du central téléphonique auquel est raccordé l'abonné appelant et que l'information concernant des appels radio à effectuer dans des zones d'autres centraux téléphoniques est transmise par le central d'appel radio (FZ) de l'abonné appelant, par le réseau téléphonique et le ou les centraux téléphoniques désirés, au central d'appel radio ou aux centraux d'appel radio (FZ) concerné(s).

7. Procédé selon une des revendications précédentes, caractérisé en ce que l'abonné appelant est connecté chaque fois au central d'appel radio (FZ) qui appartient à la zone du central téléphonique auquel est raccordé l'abonné appelant et que les informations concernant des appels radio à effectuer dans des zones d'autres centraux téléphoniques sont transmises par des lignes de transmission de données au central d'appel radio ou aux centraux d'appel radio (FZ) concerné(s).

8. Montage pour la mise en œuvre du procédé selon une des revendications 1 à 7, caractérisé en ce qu'une interface (AP) formant la jonction entre le réseau téléphonique (FN) et le central d'appel radio (FZ) est prévue individuellement pour chaque liaison et qu'un grand nombre d'interfaces (AP) formant un groupe sont reliées chaque fois à un dispositif concentrateur (KT) qui commande l'échange de données entre les interfaces (AP) et le central d'appel radio (FZ).

9. Montage selon la revendication 8, caractérisé en ce que chaque dispositif concentrateur (KT) est relié au central d'appel radio (FZ) par une ligne de transmission de données (DL), passant par exemple par des modems.

10. Montage selon la revendication 8 ou 9, caractérisé en ce que l'injection des impulsions de taxation dans le réseau téléphonique s'effectue dans l'interface (AP).

11. Montage selon une des revendications 8 à 10, caractérisé en ce qu'un dispositif d'annonces est prévu pour chaque groupe d'interfaces (AP).

12. Montage selon une des revendications 8 à 11, caractérisé en ce que l'interface (AP) présente un dispositif récepteur de numérotation de sélection et que l'information transmise à ce dispositif par les numérotations de sélection est transmise au central d'appel radio (FZ) sous forme de mots de données.

13. Montage selon une des revendications 8 à 12, caractérisé en ce que le central d'appel radio (FZ) est capable d'agir à travers un dispositif de connexion (PK) sur l'entrée des interfaces (AP) pour déclencher la simulation d'appels entrants par un dispositif de contrôle (PE), sous la commande du dispositif de connexion (PK), en vue de la vérification du bon fonctionnement de tous les dispositifs (AP, KT, DL).

14. Montage selon une des revendications 8 à 12, caractérisé en ce que le central d'appel radio (FZ) est relié à un raccordement d'abonné du réseau téléphonique et que, à des fins de contrôles, déclenchés par le central d'appel radio, un dispositif de contrôle (PE) simule des appels de cet abonné.